# EUROPEAN PATENT SPECIFICATION

(11) **EP 3 231 406 B1**
(45) Date of publication and mention of the grant of the patent: **28.11.2018**
(21) Application number: 17163828.1
(22) Date of filing: 30.03.2017
(51) Int. Cl.: A61G 5/10

(54) **SEAT CUSHION ASSEMBLY AND PERSONAL MOBILITY VEHICLE WITH SUCH A SEAT CUSHION ASSEMBLY**
SITZKISSENANORDNUNG UND PERSONENMOBILITÄTSFAHRZEUG MIT EINER DERARTIGEN SITZKISSENANORDNUNG
ENSEMBLE COUSSIN DE SIÈGE ET VÉHICULE DE MOBILITÉ PERSONNELLE DOTÉ D'UN TEL ENSEMBLE COUSSIN DE SIÈGE

(30) Priority: 06.04.2016 US 201662319098 P; 02.09.2016 US 201615256181
(43) Date of publication of application: 18.10.2017
(73) Proprietor: Sunrise Medical (US) LLC, Fresno, CA 93727 (US)
(72) Inventor: Christofferson, James, Boulder, CO 80301 (US); Hite, Gary, Boulder, CO 80301 (US)
(74) Representative: Weber-Bruls, Dorothée

(56) References cited:
- US-A1- 2005 017 396

## Description

This invention relates to a seat cushion assembly in particular for personal mobility vehicles.

Seating systems, particularly for personal mobility vehicles, such as wheelchairs, having fluid-filled cushions are known in the art. One such type of cushion and fluid system is disclosed in US 5,869,164 to Nickerson, et al. This type of fluid-filled cushion utilizes a thixotropic fluid formed from an oil and a block polymer. The block polymer includes both oil-compatible and oil-incompatible portions of the polymeric chain. Microspheres are added to decrease the fluid density and the overall weight of the cushion and to provide an adjustment to fluid viscosity. The resulting thixotropic fluid provides support by conforming to the contours of contacted body parts, deforms in response to a continuously applied pressure, and maintains the deformed shape and position in the absence of the continuously applied pressure.

The fluid, particularly when positioned in a stabilized temperature environment, does not promote a desired level of heat movement from the seated user (heat source) into the fluid and on to the surrounding thermal environment. Such heat movement away from a user has a comforting feel, much like the familiar feel of a cool pillow. The movement of heat away from the area of user contact influences both the temperature and humidity levels of the microclimate of the cushion-body interface, which impacts metabolic and physical conditions of the user's skin. Since comfort levels are influenced by heat and moisture characteristics, reducing heat and moisture levels provides an increase in comfort level.

Latex based foams, more in particular, functionalized latex foams for use in bedding or seating product, in which the foam is impregnated with one or more of additive, are known from EP 2 425 961 A1. Methods of obtaining latex foam can be those where latex being poured into a closed mould provided with aluminium pins to ensure good heat conduction, and subsequently being vulcanised, washed and dried into an end product. As a result of the presence of the aluminium pins in the closed mould, the end product comprises vertical, continuous recesses that ensure a proper ventilation.

WO 2006/100558 A1 teaches an apparatuses designed for bodily support that provide an improved level of comfort, particularly pressure relief, as well as improved control of heat transfer. Said apparatus comprises a gel layer overlying one or more additional support layers, wherein said gel layer comprises a gel having a hardness in the range of about 0.5 kPa to about 50 kPa.

US 2007/0246157 A1 discloses a method for preparing a support apparatus comprising a gel layer and a second layer, in particular for preparing a mattress. In certain embodiments, where a foam layer is used as the second layer, the foam layer may have a surface having a cavity formed therein for receiving the gel layer.

A heat-insulated composite profile, particularly for use in the production of windows, doors, facade elements or the like, is described in US 6,803,083 B2. The profile has an inner and an outer metallic profile, which metallic profiles are interlinked by at least one solid or hollow plastics profile, particularly for absorption of tensile, bending and/or pressure loads, wherein a surface layer of a solid, non-porous first plastics material and a core region comprising a fine-pored, closed-cell cellular structure of a second plastics material, the cellular structure in the core region having an average cell size ranging from 0.005 to 0.15 mm.

US 2005/017396 discloses a seat cushion assembly comprising a seat cushion which includes a flexible polymer envelope containing a thixotropic fluid.

It is the object of the present invention to provide a seat cushion assembly, in particular for a personal mobility vehicle, with improved thermal conductivity. Especially a pressure compensating, fluid-filled seat cushion is to be provided.

This object is solved by a seat cushion assembly according to claim 1. Preferred embodiments of said seat cushion assembly are described in the subclaims.

The invention also refers to a seat mobility vehicle, in particular in form of a wheel chair, having a seat cushion assembly according to the invention.

This invention relates to personal mobility seating systems. In particular, the invention relates to pressure relieving seat cushions having enhanced thermal conduction properties. In at least one embodiment, the invention provides a fluid-filled, pressure compensating seat cushion, particularly suited for personal mobility vehicles, having an adjustable thermal conduction characteristic. The seat cushion includes a flexible polymer envelope and a thixotropic fluid contained within the flexible polymer envelope. The thixotropic fluid includes a base fluid having an oil and a block polymer. The block polymer has a first portion that has an affinity to the oil and a second portion. The first and second portions interact to provide a fluid viscosity that deforms under a generally constantly applied pressure and retains the deformed shape when the pressure is removed. The thixotropic fluid further has a concentration of nanoparticles that increase heat transfer from a seated user to provide a reduced temperature sensory effect.

The invention further relates to a seat cushion having a flexible polyurethane envelope and a thixotropic fluid contained within the envelope where the thixotropic fluid includes a base fluid having an oil and one of a di-block and a tri-block polymer. The polymer, either formed as the di-block or the tri-block polymer has a first portion that has an affinity to the oil and a second portion. The first and second portions interacting to provide a fluid viscosity that deforms under a generally constantly applied pressure and retains the deformed shape when the pressure is removed. The thixotropic fluid has concentration of nanoparticles configured to increase heat transfer from a seated user to provide a reduced temperature sensory effect. In one embodiment, the base fluid is formulated with the tri-block polymer that includes a third portion having the same oil affinity as the first portion.

In particular, certain embodiments relate to pressure relieving seats having enhanced thermal conduction properties. In at least one embodiment, the invention provides a fluid-filled, pressure compensating seat cushion, particularly suited for personal mobility vehicles, having an adjustable thermal conduction characteristic.

Various aspects of this invention will become apparent to those skilled in the art from the following detailed description of the preferred embodiment, when read in light of the accompanying drawings.
- Fig. 1: is an exploded, perspective view of an embodiment of a seat cushion assembly of the invention which includes a thermally conductive, pressure compensating fluid.
- Fig. 2: is a photomicrograph of an embodiment of a nanoparticle constituent of the thermally conductive, pressure compensating fluid used by the seat cushion assembly of Fig. 1.

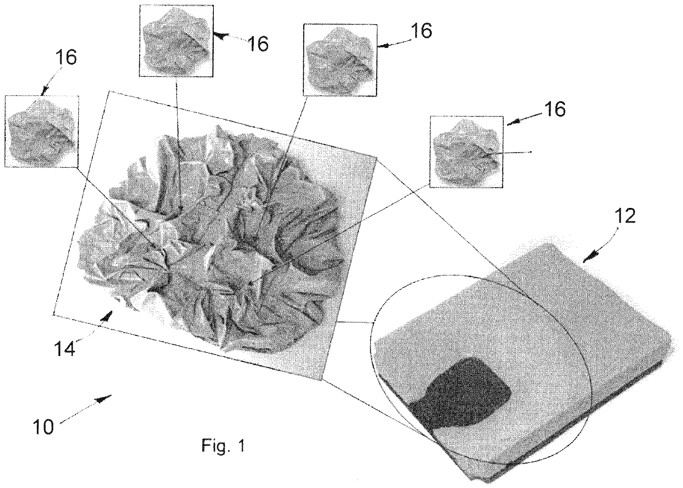

Referring now to the drawings, there is illustrated in Fig. 1 a pressure compensating, fluid-filled seat cushion assembly 10 that is configured for use in a personal mobility vehicle, such as a wheelchair or scooter (not shown). The seat cushion assembly 10 includes a foundation cushion 12, a central fluid pad 14, and a plurality of secondary fluid pads 16. The fluid pads 14 and 16 include a pressure-compensating fluid composition. The pads 14 and 16 may have the same or different fluid formulations, that provide both support and temperature control of a seated user. In one embodiment, the fluid is formulated from a block polymer, an oil, and a proportioned quantity of microspheres and nanoparticles. The fluid pads 14 and 16 have an outer containment structure configured as a polymer bag or envelope that is flexible in response to an applied pressure. In one embodiment, the polymer bag is a polyurethane envelope. In other embodiments, the flexible polymer envelope may be formed from any suitable flexible material that is chemically compatible with a thixotropic, pressure relieving and thermally conductive fluid. The nanoparticles are formulated and constructed to increase the thermal energy transfer from a heat source, such as a seated user (not shown) in contact with the fluid pads 14 and 16, to the fluid composition, and subsequently to the atmosphere. While the seat cushion assembly 10 is shown having a plurality of cushion elements, such is not required. It may alternatively comprise a single fluid-filled envelope of any size, shape, and thickness.

In another embodiment, thermal energy transfer, in the form of heat, may also be increased and directed back to the user. Active cooling and heating may utilize a thermoelectric generator that is configured to drive a temperature gradient across the fluid (thermoelectric generator on one side of a fluid bladder and a user on the other of the fluid bladder). In one embodiment, the heat transfer may act in a manner similar to a heating pad. In another embodiment, the thermal pumping mechanism, such as the thermoelectric generator, of the nanoparticle fluid may be switch from directing heat to the user to directing heat away from the user, or visa versa.

The fluid composition is a viscous fluid having a base of an oil and a block polymer. The block polymer may be configured as a di-block polymer or a tri-block polymer. The di-block polymer includes two sections having different affinity characteristics with respect to the oil. One of the block sections, such as an elastomer block, has a strong affinity to the oil and the other while the other block section, such as a rigid polystyrene block, has a poor affinity to the oil. In one embodiment, the rigid polystyrene blocks have a strong affinity to each other causing these blocks to cluster together. Consequently, the elastomer based blocks will radiate outwardly. As the concentration of di-block clusters becomes sufficient, the elastomer block section tend to entangle, causing the fluid to take on a thixotropic flow characteristic. This thixotropic characteristic tends to cause the fluid to deform in response to a constantly applied pressure and to maintain the deformed shape when the pressure is removed. The tri-block polymer includes three sections where the end sections have a different oil affinity than the center polymer block section. In one embodiment, the di-block polymer may be a polystyrene/polybutadiene or polystyrene/polyisoprene block. The polystyrene portion exhibits a weak or poor affinity to the oil and the polybutadiene or polyisoprene block exhibits a strong affinity for the oil. The oil may be a polyalphaolefin oil or vegetable oil, such as canola oil. Alternatively, the fluid base composition may be an emulsified, thixotropic paste formulated similar to grease.

The base blend of oil and block polymer may form micelles based on the polarizing effect of the di-block constituents combining with the selected oil. The base blend fluid may include hollow or low density, solid microspheres in order to decrease the density of the formulation and adjust the blend to a desired viscosity. The microspheres may be plastic in composition and may include a gas to fill the hollow center. In one embodiment, the microspheres may be a polyacrilonitrile and polymethylmethacrylate (PAN/PMMA) material filled with isobutane gas. In one embodiment, the fluid blend of oil, block polymer and microspheres may exhibit a viscosity in a range of about 100,000 - 300,000 centipoise. In another embodiment, the viscosity range may be in a range of about 180,000 to 200,000 centipoise. In addition, supplemental thickeners may also be added to adjust the final viscosity level.

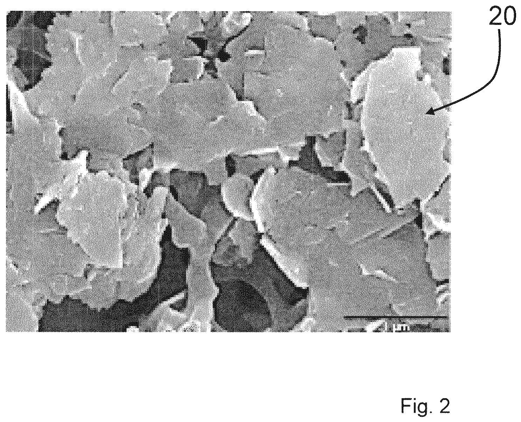

In order to improve the thermal conductivity of the fluid, nanoparticles may be added to increase heat transfer from the user to the fluid. Nanoparticles made from materials having higher values of thermal conductivity (expressed in W/(m-K)), such as metals or graphine, provide an improved heat transfer capability of the supporting fluid. The nanoparticles made be formed in any suitable shape, such as tubular, round, spherical, disk, platelet, amorphous particulate, or combination thereof and any arrangement such as long or short, tangled, striated, or parallel. In one embodiment, the nanoparticles may be of a generally round shape forming nanospheres. In another embodiment, shown in Fig. 2, the nanoparticles are graphine nanoplatelets 20. In one embodiment, the nanoparticles have a size range from about 1 to 20 nanometers thick and about 1 to 50 microns wide. The nanoparticles, and in one particular embodiment of nanoplatelets, may be provided in a weight fraction range of up to 20%. In another embodiment, the nanoplatelets may be in a weight fraction range from about 1-10%. In yet another embodiment, the weight fraction range may be about 4-6%.

The nanoparticles may be mixed into the base fluid by stirring or shaking in order to provide a generally homogenous and even dispersion. The even dispersion of nanoparticles in the base fluid facilitates a more even heat transfer over the surface area of the seat pads 14 and 16. The more even heat transfer provides an improved perception of comfort and cooling to the seated user.

Experimental data has verified the effect of improved thermal conductivity with the addition of graphine nanoparticles. Three samples each of the base fluid and the nanoparticle enhanced fluid were subjected to testing and measurement of thermal properties. The base fluid and the nanoparticle enhanced base fluid both contained microspheres or micro-balloons which are added to reduce the fluid density and increase the fluid viscosity. Thermal conductivity of the samples were measured using a modified transient plane source sensor, placed in contact with each of the specimens. The thermal conductivity was measured at a test temperature of approximately 23 degrees C. Test samples for the base fluid (without nanoplatelets) yielded thermal conductivity measurements of 0.087 W/m-K, 0.086 W/m-K and 0.085 W/m-K. Test samples having a weight fraction of about 4% graphine nanoparticles added to the base fluid yielded results of 0.118 W/m-K, 0.111 W/m-K, and 0.119 W/m-K. Thus, the effectiveness of nanoparticles in increasing thermal conductivity of the thixotropic pressure-compensating support fluid has been demonstrated and verified.

Additional testing on samples of base fluid material without the addition of microspheres (referred to as "grease") and with varying amounts of graphine also confirm improved thermal conductivity. In addition, the graphine material provides the ability to increase fluid density, albeit at a higher fluid density as compared to fluids using microspheres. Under similar test conditions to those above, three specimens were each sampled three times and the results listed in the table below.

| Specimen ID | Nominal Temperatue (°C) | Sensor Temperatue (°C) | Apparent Thermal Corductivity (W/m.K) | Standard Deviation (W/m·K) | Derived Specific Heat (J/kg-K) | Test Number |
|---|---|---|---|---|---|---|
| #1 50-50 | 23 | 24.7 | 0.419 | 0.001 | 3005 | 566 |
| | | 24.5 | 0.414 | 0.001 | 2972 | 567 |
| | | 23.1 | 0.433 | 0.001 | 3087 | 572 |
| Averages | | | 0.422 | - | 3021 | - |
| #2 50-25 | 23 | 24.4 | 0.480 | 0.001 | 3368 | 568 |
| | | 24.2 | 0.527 | 0.002 | 3627 | 569 |
| | | 23.2 | 0.496 | 0.002 | 3456 | 573 |
| Averages | | | 0.501 | - | 3483 | - |
| #3 50-15 | 23 | 24.1 | 0.557 | 0.002 | 3776 | 570 |
| | | 23.9 | 0.552 | 0.001 | 3747 | 571 |
| | | 23.3 | 0.526 | 0.002 | 3612 | 574 |
| Averages | | | 0.545 | - | 3712 | - |

The samples listed under "Specimen ID include different amounts of graphine, by weight, added to the base fluid grease. Specimen #1 50-50 included graphine in a range of about 10% to about 10.5% by weight. Specimen #2 50-25 included graphine in a range of 13% to 13.5% by weight. Specimen #3 50-15 included graphine in a range of about 15% to about 15.5% by weight. The test results show improved thermal conductivity as the graphine content increases.

Within and above the ranges and amounts of nanoparticles described above, the addition of nanoparticles to the base fluid influences the overall viscosity of the fluid. Increases in fluid viscosity influences the support characteristics of the seat cushions, particularly where boney protuberances, such as the ischial tuberosities, are involved in supporting the seated weight of a user. Thus, there is a desired range of viscosity to support a user's weight and provide isolation of these pressure points. A target viscosity of about 100,000 to 300,000 Cp provides a desired seating feel to a user and tends to support areas around the boney protuberances, such as the ischial tuberosities which minimize focused pressure on the skin against these protuberances. The increases in viscosity with the addition of nanoparticles may be compensated for by reducing the volume of microspheres. The tradeoff is an increased material density and higher cushion weight. In one embodiment, the weight fraction of graphine added to the base fluid without microspheres is in a range of 10-15% and produces a viscosity similar to the base fluid with microspheres in the range of about 100,000 to 300,000 Cp.

The invention, in summary, provides, a seating system, particularly suited for personal mobility vehicles, such as wheelchairs, which includes a seat cushion having pressure relieving properties and enhanced thermal conduction properties. The seat cushion includes a thixotropic fluid contained within a flexible envelope. The thixotropic fluid includes nanoparticles that enhance the thermal conduction properties of the seat cushion to increase heat transfer from a seated user to provide a reduced temperature sensory effect.

The principle and mode of operation of this invention have been explained and illustrated in its preferred embodiment. However, it must be understood that this invention may be practiced otherwise than as specifically explained and illustrated without departing from its scope.

### Reference Signs

- 10: pressure compensating, fluid-filled seat cushion assembly
- 12: foundation cushion
- 14: central fluid pad
- 16: secondary fluid pad
- 20: graphine nanoplatelets

## Claims

1. A seat cushion assembly (10), in particular for a personal mobility vehicle, comprising:
a flexible envelope; and
a thixotropic fluid contained within the flexible envelope, the thixotropic fluid including a base fluid comprising an oil and a block polymer, the block polymer having a first portion that has an affinity to the oil and a second portion, the first and second portions interacting to provide a fluid viscosity that deforms under a generally constantly applied pressure and
retains the deformed shape when the pressure is removed, **characterized in that** the thixotropic fluid has concentration of nanoparticles configured to increase heat transfer from a seated user to provide a reduced temperature sensory effect.

2. The seat cushion assembly (10) of claim 1, wherein
the nanoparticles have a geometric shape of at least one of a tubular, round, spherical, disk, platelet, and amorphous particulate.

3. The seat cushion assembly (10) of claim 1 or 2, wherein
the nanoparticles are nanoplatelets, preferably the nanoparticles being graphine nanoplatelets (20) and/or having a size range of about 1 to 20 nanometers thick and about 1 to 50 microns wide.

4. The seat cushion assembly (10) of one of the preceding claims, wherein
the heat transfer increase is proportional to the percent weight fraction of nanoparticles, preferably the nanoparticles being provided in a weight fraction range of up to 20% of the base fluid,
most preferably the nanoplatelets being provided in a weight fraction range of up to 20% of the base fluid.

5. The seat cushion assembly (10) of claim 4, wherein
i) the nanoparticles are provided with a weight fraction range of about 10-15%, or
ii) the nanoparticles are provided with a weight fraction range of about 4-6% and the base fluid includes microspheres, the base fluid having a viscosity in the range of about 100,000 to 300,000 Cp.

6. The seat cushion assembly (10) of one of the preceding claims, wherein
the block polymer is configures as a di-block or a tri-block polymer.

7. The seat cushion assembly (10) of one of the preceding claims, wherein
the block polymer is a di-block polymer formed from one of polystyrene/polybutadiene and polystyrene/polyisoprene, the polystyrene block forming the second portion providing a weak affinity to the oil and the one of polybutadiene or polyisoprene block exhibits a strong affinity for the oil.

8. The seat cushion assembly (10) of claim 6, wherein
the base fluid comprises the oil and the tri-block polymer, and the tri-block polymer includes a third portion that has the same oil affinity as the first portion.

9. The seat cushion assembly (10) of claim 6, wherein
the oil is one of a polyalphaolefin oil, a vegetable oil, and a synthetic oil, preferably the oil being a canola oil.

10. The seat cushion assembly (10) of one of the preceding claims, wherein
the base fluid includes microspheres.

11. The seat cushion assembly (10) of one of the preceding claims, wherein
the flexible envelope is a flexible polymer envelope or a flexible polyurethane envelope.

12. The seat cushion assembly (10) of one of the preceding claims, wherein
a thermal pumping means or thermoelectric generator is provided to drive a temperature gradient across the fluid to either heat or cool a user on the seat cushion assembly (10).

13. The seat cushion assembly (10) of one of the preceding claims, wherein
a foundation cushion (12), a central fluid pad (14) and a plurality of secondary fluid pads (16) are provided, with the fluid pads (14 and 16) each including a pressure-compensating fluid composition, which can have the same or different fluid formulations and at least one of which comprises the thixotropic fluid.

14. A personal mobility vehicle, in particular in form of a wheelchair, having a seat cushion assembly (10) of one of the preceding claims.

## Patentansprüche

1. Sitzkissenanordnung (10), insbesondere für ein Personenmobilitätsfahrzeug, umfassend:
eine flexible Hülle; und
ein thixotropes Fluid, enthalten innerhalb der flexiblen Hülle, wobei das thixotrope Fluid ein Basisfluid, umfassend ein Öl und ein Blockpolymer, umfasst, wobei das Blockpolymer einen ersten Teil, der eine Affinität zu dem Öl aufweist, und einen zweiten Teil aufweist, wobei der erste und zweite Teil wechselwirken, um eine Fluidviskosität bereitzustellen, die sich unter einem allgemein konstant angewandten Druck verformt und die verformte Form beibehält, wenn der Druck aufgehoben wird, **dadurch gekennzeichnet, dass** das thixotrope Fluid eine Konzentration an Nanopartikeln aufweist, die konfiguriert ist, um die Wärmeübertragung von einem sitzenden Nutzer zu erhöhen, um eine sensorische Wirkung einer verringerten Temperatur bereitzustellen.

2. Sitzkissenanordnung (10) nach Anspruch 1, wobei
die Nanopartikel eine geometrische Form von mindestens einer eines röhrenförmigen, runden, kugelförmigen Partikels, Scheibenpartikels, Plättchenpartikels und amorphen Partikels aufweisen.

3. Sitzkissenanordnung (10) nach Anspruch 1 oder 2, wobei
die Nanopartikel Nanoplättchen sind, vorzugsweise die Nanopartikel Graphen-Nanoplättchen (20) sind und/oder einen Größenbereich von etwa 1 bis 20 Nanometer Dicke und etwa 1 bis 50 Mikrometer Breite aufweisen.

4. Sitzkissenanordnung (10) nach einem der vorangehenden Ansprüche, wobei die Erhöhung der Wärmeübertragung proportional zu dem prozentualen Gewichtsanteil der Nanopartikel ist,
vorzugsweise die Nanopartikel in einem Gewichtsanteilbereich von bis zu 20 % des Basisfluids bereitgestellt werden,
am meisten bevorzugt die Nanoplättchen in einem Gewichtsanteilbereich von bis zu 20 % des Basisfluids bereitgestellt werden.

5. Sitzkissenanordnung (10) nach Anspruch 4, wobei
i) die Nanopartikel mit einem Gewichtsanteilbereich von etwa 10-15 % bereitgestellt werden, oder
ii) die Nanopartikel mit einem Gewichtsanteilbereich von etwa 4-6 % bereitgestellt werden und das Basisfluid Mikrokügelchen enthält, wobei das Basisfluid eine Viskosität in dem Bereich von etwa 100.000 bis 300.000 cP aufweist.

6. Sitzkissenanordnung (10) nach einem der vorangehenden Ansprüche, wobei das Blockpolymer als Diblock- oder Triblockpolymer konfiguriert ist.

7. Sitzkissenanordnung (10) nach einem der vorangehenden Ansprüche, wobei das Blockpolymer ein Diblockpolymer, gebildet aus einem von Polystyrol/Polybutadien und Polystyrol/Polyisopren, ist, wobei der den zweiten Teil bildende Polystyrolblock eine schwache Affinität zu dem Öl bereitstellt und der eine von Polybutadien- oder Polyisoprenblock eine starke Affinität zu dem Öl aufweist.

8. Sitzkissenanordnung (10) nach Anspruch 6, wobei
das Basisfluid das Öl und das Triblockpolymer umfasst, und das Triblockpolymer einen dritten Teil umfasst, der die gleiche Affinität zu dem Öl wie der erste Teil aufweist.

9. Sitzkissenanordnung (10) nach Anspruch 6, wobei
das Öl eines von einem Polyalphaolefinöl, einem pflanzlichen Öl und einem synthetischen Öl ist, vorzugsweise das Öl ein Rapsöl ist.

10. Sitzkissenanordnung (10) nach einem der vorangehenden Ansprüche, wobei das Basisfluid Mikrokügelchen enthält.

11. Sitzkissenanordnung (10) nach einem der vorangehenden Ansprüche, wobei die flexible Hülle eine flexible Polymerhülle oder eine flexible Polyurethanhülle ist.

12. Sitzkissenanordnung (10) nach einem der vorangehenden Ansprüche, wobei ein Wärmepumpmittel oder ein thermoelektrischer Generator vorgesehen ist, um einen Temperaturgradienten durch das Fluid zu treiben, um einen Nutzer auf der Sitzkissenanordnung (10) entweder zu wärmen oder zu kühlen.

13. Sitzkissenanordnung (10) nach einem der vorangehenden Ansprüche, wobei ein Basiskissen (12), ein Hauptfluidkissen (14) und eine Mehrzahl von sekundären Fluidkissen (16) vorgesehen sind, wobei die Fluidkissen (14 und 16) jeweils eine druckausgleichende Fluidzusammensetzung enthalten, die die gleiche oder unterschiedliche Fluidformulierung(en) aufweisen können und von denen mindestens eine das thixotrope Fluid umfasst.

14. Personenmobilitätsfahrzeug, insbesondere in Form eines Rollstuhls, mit einer Sitzkissenanordnung (10) nach einem der vorangehenden Ansprüche.

## Revendications

1. Ensemble coussin de siège (10), en particulier pour un véhicule de mobilité personnelle, comprenant :
une enveloppe flexible ; et
un fluide thixotrope contenu dans l'enveloppe flexible, le fluide thixotrope incluant un fluide de base comprenant une huile et un polymère séquencé, le polymère séquencé ayant une première portion qui a une affinité avec l'huile et une deuxième portion, les première et deuxième portions interagissant pour fournir une viscosité de fluide qui se déforme sous une pression appliquée de façon généralement constante et conserve la forme déformée lorsque la pression est supprimée, **caractérisé en ce que** le fluide thixotrope a une concentration de nanoparticules configurée pour augmenter le transfert de chaleur d'un utilisateur assis pour fournir un effet sensoriel de température réduit.

2. Ensemble coussin de siège (10) selon la revendication 1, dans lequel les nanoparticules ont une forme géométrique d'au moins l'une des particules tubulaires, rondes, sphériques, à disque, à plaquettes et amorphes.

3. Ensemble coussin de siège (10) selon la revendication 1 ou 2, dans lequel les nanoparticules sont des nanoplaquettes, de préférence les nanoparticules étant des nanoplaquettes de graphène (20) et/ou ayant une plage de dimensions d'environ 1 à 20 nanomètres d'épaisseur et d'environ 1 à 50 micromètres de largeur.

4. Ensemble coussin de siège (10) selon l'une des revendications précédentes, dans lequel l'augmentation de transfert de chaleur est proportionnelle à la fraction de poids en pourcentage de nanoparticules, de préférence les nanoparticules étant fournies dans une plage de fraction de poids jusqu'à 20 % du fluide de base,
le plus préférablement les nanoplaquettes étant fournies dans une plage de fraction de poids jusqu'à 20 % du fluide de base.

5. Ensemble coussin de siège (10) selon la revendication 4, dans lequel
i) les nanoparticules sont fournies avec une plage de fraction de poids d'environ 10-15 %, ou
ii) les nanoparticules sont fournies avec une plage de fraction de poids d'environ 4-6 %, et le fluide de base incluant des microsphères, le fluide de base ayant une viscosité dans la plage d'environ 100.000 à 300.000 cP.

6. Ensemble coussin de siège (10) selon l'une des revendications précédentes, dans lequel le polymère séquencé est configuré comme un polymère diséquencé ou triséquencé.

7. Ensemble coussin de siège (10) selon l'une des revendications précédentes, dans lequel
le polymère séquencé est un polymère diséquencé formé à partir de l'un des polystyrène/polybutadiène et polystyrène/polyisoprène, la séquence de polystyrène formant la deuxième portion fournissant une affinité faible avec l'huile et la séquence de l'un de polybutadiène ou polyisoprène présente une affinité forte avec l'huile.

8. Ensemble coussin de siège (10) selon la revendication 6, dans lequel le fluide de base comprend l'huile et le polymère triséquencé, et le polymère triséquencé comprend une troisième portion qui a la même affinité avec l'huile que la première portion.

9. Ensemble coussin de siège (10) selon la revendication 6, dans lequel l'huile est l'une des huiles suivantes : huile polyalphaoléfine, huile végétale et huile synthétique, de préférence l'huile étant une huile de canola.

10. Ensemble coussin de siège (10) selon l'une des revendications précédentes, dans lequel
le fluide de base inclut des microsphères.

11. Ensemble coussin de siège (10) selon l'une des revendications précédentes, dans lequel
l'enveloppe flexible est une enveloppe polymère flexible ou une enveloppe polyuréthane flexible.

12. Ensemble coussin de siège (10) selon l'une des revendications précédentes, dans lequel un moyen de pompage thermique ou un générateur thermoélectrique est prévu pour entraîner un gradient de température à travers le fluide afin de réchauffer ou de rafraîchir un utilisateur sur l'ensemble coussin de siège (10).

13. Ensemble coussin de siège (10) selon l'une des revendications précédentes, dans lequel
un coussin de base (12), un coussin de fluide central (14) et une pluralité de coussins de fluide secondaires (16) sont prévus, les coussins de fluide (14 et 16) incluant chacune une composition de fluide à compensation de pression, laquelle peut avoir les mêmes formulations de fluide ou des formulations de fluide différentes, et au moins l'une d'entre elles comprend le fluide thixotrope.

14. Véhicule de mobilité personnelle, en particulier sous la forme d'un fauteuil roulant, ayant un ensemble coussin de siège (10) selon l'une des revendications précédentes.
